# DEMANDE DE BREVET EUROPEEN

(11) **EP 0 858 928 A1**
(43) Date de publication de la demande: **19.08.1998**
(21) Numéro de dépôt: 98400052.1
(22) Date de dépôt: 13.01.1998
(51) Int. Cl.: B60N 2/44

(54) **Siège perfectionné pour véhicule automobile**

(30) Priorité: 13.02.1997 FR 9701691
(71) Demandeur: CESA Compagnie Européenne de Sièges pour Automobiles, 92300 Levallois-Perret (FR)
(72) Inventeur: Amorim, David, 45290 Nogent sur Vernisson (FR); Geoffroy, Yves, 45290 Nogent sur Vernisson (FR); Zunino, Eric, 45290 Nogent sur Vernisson (FR)
(74) Mandataire: de la Bigne, Guillaume Michel Marie

(57) **Abrégé**

Ce siège comprend une armature de dossier (28) reliée à une armature d'assise (22) par des moyens (34) d'articulation autour d'un axe (X) sensiblement transversal au siège. L'armature (28) de dossier porte une tige (56) sensiblement transversale d'accrochage d'une coiffe recouvrant une matelassure du dossier. Cette tige d'accrochage, qui s'étend à proximité des moyens d'articulation (34), est munie de prolongements d'extrémités (60) formant des protections destinées à empêcher un choc d'un passager assis derrière le siège contre les moyens d'articulation (34). De préférence, chaque prolongement de protection comporte une anse (60) s'incurvant autour de l'axe d'articulation (X), sensiblement parallèlement à un plan perpendiculaire à cet axe.

## Description

La présente invention concerne un siège perfectionné pour véhicule automobile.

Il est connu de FR-A-2 722 150 (FR-A-94 08 297) un siège pour véhicule automobile, du type comprenant une assise munie d'une armature d'assise et un dossier muni d'une armature de dossier portant une matelassure recouverte d'une coiffe, l'armature de dossier étant reliée à l'armature d'assise par des moyens d'articulation autour d'un axe sensiblement transversal au siège, l'armature de dossier portant une tige sensiblement transversale d'accrochage de la coiffe de dossier, cette tige s'étendant à proximité des moyens d'articulation.

On souhaite de plus en plus fréquemment pouvoir placer un siège de ce type dans différentes configurations d'utilisation, par exemple, une configuration normale adaptée notamment à la conduite, dans laquelle le dossier est sensiblement vertical, ou bien une configuration en "tablette", dans laquelle le dossier est rabattu sensiblement horizontalement contre l'assise.

Dans le cas d'un siège avant placé dans une configuration en "tablette", les moyens d'articulation du dossier de ce siège forment des protubérances dirigées vers les places arrière de l'habitacle du véhicule. En cas de choc frontal, un passager assis derrière le siège en "tablette" risque d'heurter violemment certains éléments dangereux des moyens d'articulation de ce siège, en particulier les flasques saillants d'articulation des armatures d'assise et de dossier du siège.

L'invention a pour but d'empêcher le choc d'un passager assis derrière un siège contre des éléments dangereux des moyens d'articulation du dossier de ce siège, lorsque ce dossier a été rabattu contre l'assise.

A cet effet, l'invention a pour objet un siège pour véhicule automobile, du type précité, caractérisé en ce que la tige est munie de prolongements d'extrémités formant des protections destinées à empêcher un choc d'un passager assis derrière le siège contre les moyens d'articulation.

Suivant d'autres caractéristiques de ce siège:
- chaque prolongement de protection comporte une anse s'incurvant autour de l'axe d'articulation du siège, sensiblement parallèlement à un plan perpendiculaire à cet axe ;
- les moyens d'articulation comprennent une paire d'articulations latérales reliant chacune un flasque latéral solidaire de l'armature de dossier à un flasque latéral correspondant solidaire de l'armature d'assise, chaque flasque d'armature de dossier étant entouré, au moins partiellement, d'une anse de protection correspondante ;
- l'anse de protection comporte une première extrémité de jonction avec le reste de la tige et une seconde extrémité libre, ces première et seconde extrémités étant fixées sur le flasque de dossier correspondant;
- les première et seconde extrémités de l'anse sont soudées sur le flasque de dossier correspondant;
- l'armature de dossier comprend deux branches tubulaires munies d'extrémités libres délimitant les flasques de dossier, ces flasques de dossier comportant chacun une zone centrale aplatie par écrasement des extrémités libres et bordée par deux bourrelets creux sensiblement parallèles, l'extrémité libre de chaque anse étant emboîtée dans un des bourrelets du flasque de dossier correspondant ;
- la tige d'accrochage comprend un tronçon formant traverse relié aux deux anses par deux tronçons de liaison pliés en forme générale de manivelle, de manière que le tronçon formant traverse est décalé sensiblement perpendiculairement à l'axe d'articulation par rapport aux extrémités de jonction des anses, vers le bas du dossier en considérant ce dernier dressé dans une position normale d'utilisation ;
- le dossier est rabattable contre l'assise, en position sensiblement horizontale, de manière à placer le siège dans une configuration en tablette.

L'invention sera mieux comprise à la lecture de la description qui va suivre donnée uniquement à titre d'exemple et faite en se référant aux dessins dans lesquels:
- la figure 1 est une vue en perspective d'un siège pour véhicule automobile selon l'invention ;
- la figure 2 est une vue partielle de face des armatures d'assise et de dossier du siège représenté à la figure 1 ;
- la figure 3 est une vue à échelle agrandie, suivant la flèche 3 de la figure 2, montrant notamment deux flasques d'armatures d'assise et de dossier articulés entre eux ;
- la figure 4 est une vue en coupe suivant la ligne 4-4 de la figure 3 ;
- la figure 5 est une vue en perspective de la tringle d'accrochage de coiffe du dossier du siège représenté à la figure 1.

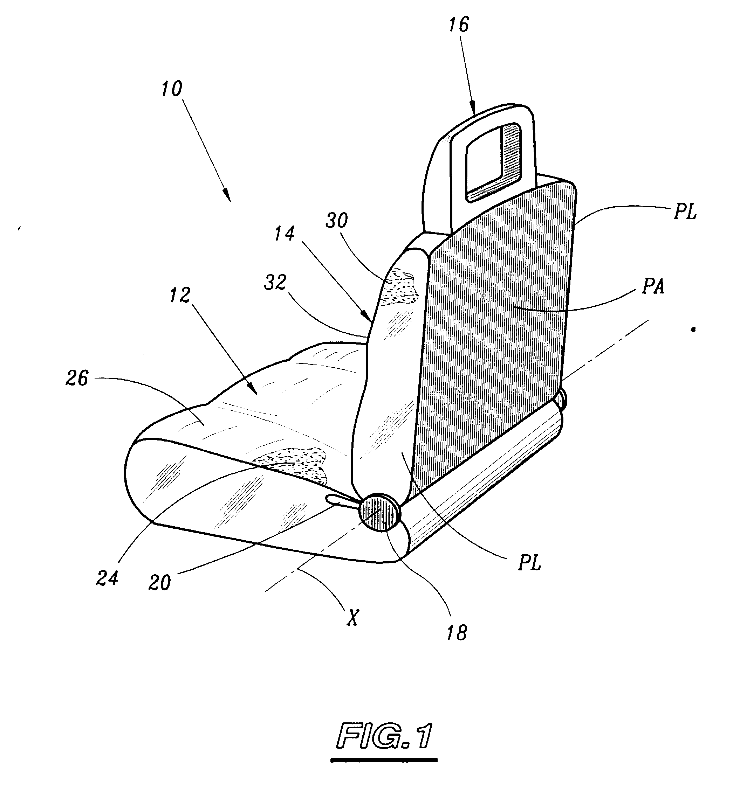

On a représenté sur la figure 1 un siège 10 pour véhicule automobile selon l'invention, par exemple un siège avant, comportant une assise 12 et un dossier 14 surmonté d'un appuie-tête 16.

Le dossier 14 est articulé par rapport à l'assise 12 autour d'un axe X sensiblement transversal au siège 10, à l'aide de moyens d'articulation qui seront décrits plus en détail par la suite.

Ces moyens d'articulation sont commandés de façon connue en soi, par exemple par un bouton 18 et un levier 20.

Le siège 10 peut être placé dans différentes configurations d'utilisation, notamment, une configuration en siège normal, adaptée notamment à la conduite, dans laquelle le dossier 14 est sensiblement vertical comme cela est représenté sur la figure 1, et une configuration en "tablette", dans laquelle le dossier 14 est rabattu contre l'assise 12 dans une position sensiblement horizontale.

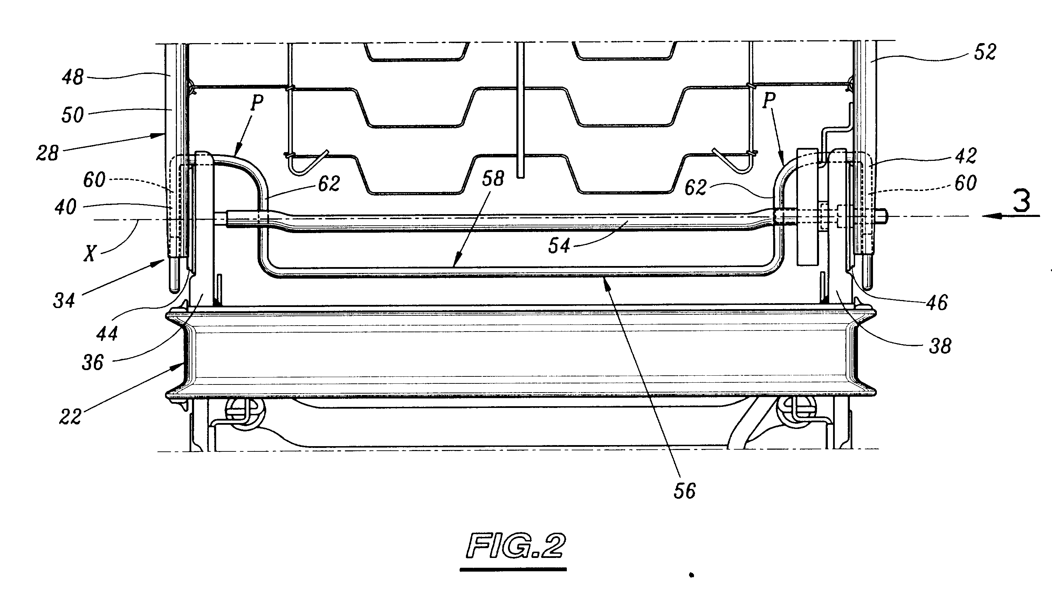

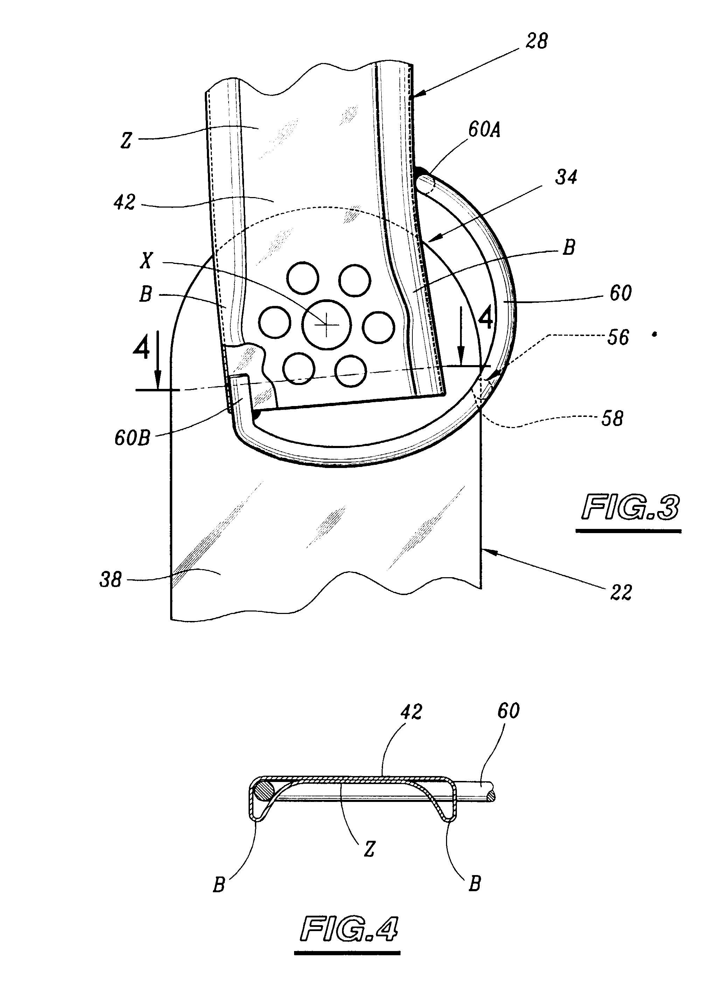

L'assise 12 comporte une armature 22, représentée partiellement sur les figures 2 et 3, portant une matelassure 24 recouverte d'une coiffe 26.

De façon similaire, le dossier 14 comporte une armature 28, représentée partiellement sur les figures 2 et 3, portant une matelassure 30 recouverte d'une coiffe 32.

Cette coiffe de dossier 32 comporte notamment un panneau arrière PA et deux joues ou panneaux latéraux PL.

Les moyens d'articulation 34 du dossier sur l'assise relient l'armature de dossier 28 à l'armature d'assise, comme on peut le voir notamment sur la figure 2.

Les moyens d'articulation 34 comprennent une paire de flasques latéraux 36,38 solidaires de l'armature 22 d'assise et une paire de flasques latéraux 40,42 solidaires de l'armature 28 de dossier. Les moyens d'articulation 34 comprennent de plus une paire d'articulations latérales 44,46 reliant chacune un flasque latéral 36,38 d'assise à un flasque latéral 40,42 de dossier correspondant.

Ces articulations 44,46 sont classiques, par exemple du type décrit et illustré dans FR-A-2 722 150 (FR-A-94 08 297).

On notera, en se référant notamment aux figures 2 à 4, que l'armature 28 de dossier comprend un tube 48 plié en forme générale de U comportant deux branches tubulaires 50,52 munies d'extrémités libres délimitant les flasques 40,42 d'articulation de dossier.

Ces flasques 40,42 de dossier comprennent chacun une zone centrale Z aplatie par écrasement des extrémités libres du tube 48, bordée longitudinalement par deux bourrelets creux B sensiblement parallèles entre eux.

Les articulations 44,46 sont couplées entre elles de façon connue en soi par une tringle 54.

On a également représenté sur la figure 2 une tige 56 d'accrochage de la coiffe 32 de dossier, portée par l'armature 28 de dossier. Cette tige 56 s'étend sensiblement transversalement au siège, à proximité des moyens d'articulation 34.

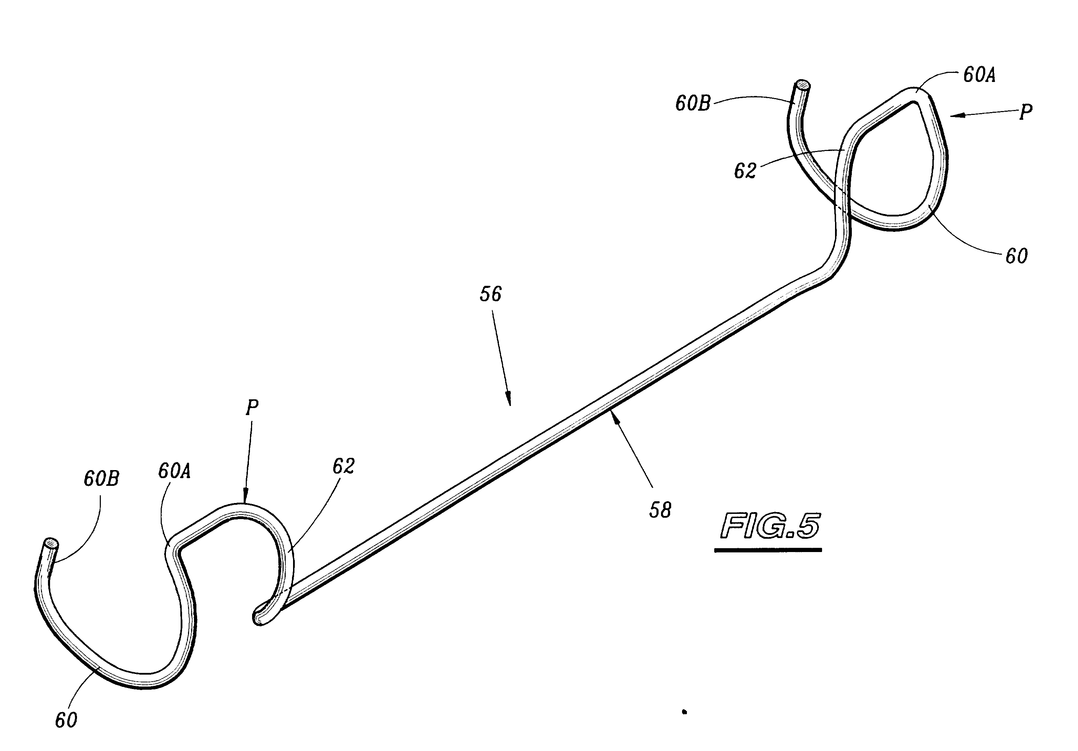

La tige 56, illustrée en détail sur la figure 5, comporte un tronçon 58 formant traverse sur lequel le panneau arrière PA de la coiffe 32 est accroché à l'aide de moyens classiques. Ce tronçon 58 est muni de prolongements d'extrémités P formant des protections destinées à empêcher un choc d'un passager assis derrière le siège 10 contre les éléments dangereux des moyens d'articulation 34, notamment contre les flasques latéraux 36 à 42.

Chaque prolongement P comporte une anse 60 s'incurvant autour de l'axe X, sensiblement parallèlement à un plan perpendiculaire à cet axe, comme on peut le voir notamment sur la figure 3.

Les deux anses 60 sont reliées au tronçon formant traverse 58 par deux tronçons de liaison 62 pliés en forme générale de manivelle.

Chaque anse 60 est munie d'une première extrémité de jonction 60A avec le reste de la tige, plus précisément avec le tronçon de liaison 62 correspondant, et d'une seconde extrémité libre 60B. En se référant à la figure 3, on voit que les extrémités de jonction 60A et libre 60B de chaque anse sont fixées, de préférence par soudure, sur un flasque 40,42 de dossier correspondant, de manière à entourer ce flasque au moins partiellement.

De préférence, l'extrémité libre 60B des anses 60 est emboîtée dans un des bourrelets creux B du flasque 40,42 de dossier correspondant.

On notera que les tronçons de liaison 62 en forme générale de manivelle permettent d'obtenir un décalage du tronçon formant traverse 58 sensiblement perpendiculairement à l'axe X par rapport aux premières extrémités 60A des anses, vers le bas du dossier 14 en considérant ce dernier dans sa position dressée sensiblement verticale.De cette façon, le tronçon formant traverse 58 s'étend suffisamment bas dans le dossier pour que le panneau arrière PA de la coiffe recouvre de façon satisfaisante la partie basse du dossier.

On notera que les joues PL de la coiffe 32 de dossier peuvent être avantageusement accrochées sur les anses 60 de manière à obtenir un aspect extérieur de la coiffe 32 très satisfaisant.

L'invention comporte de nombreux avantages.

Lorsque le siège selon l'invention est dans une configuration en "tablette" (le dossier 14 étant rabattu contre l'assise 12), les anses 60 de la tige d'accrochage 56 empêchent le choc d'un passager assis derrière le siège, d'une part, contre les flasques 40,42 de dossier entourés au moins partiellement par les anses 60 qui y sont fixées, et d'autre part, contre les flasques 36,38 d'assise et les articulations 44,46 qui s'étendent à proximité des anses 60, en retrait par rapport à ces dernières en considérant le sens vers lequel est projeté le passage lors d'un choc frontal.

Les flasques d'articulations 36 à 42 comportent en effet des bords ou des arrêtes pointus ou tranchants susceptibles, en l'absence des anses de protection, de blesser un passager qui les heurte.

La tige d'accrochage de coiffe, munie des prolongements formant protections, est très simple à fabriquer, notamment par pliage d'un fil métallique. Ainsi, la tige d'accrochage permet d'éviter l'agencement coûteux de boîtiers de protection autour des moyens d'articulation du dossier.

Par ailleurs, le tronçon formant traverse et les anses de la tige d'accrochage permettent d'accrocher les panneaux arrière et latéraux de la coiffe de dossier de façon simple, en obtenant une excellente finition.

Bien entendu, l'invention s'applique à tout siège de véhicule dont on veut protéger les moyens d'articulation du dossier, ceci même si le dossier n'est pas destiné à être rabattu complètement contre l'assise mais est simplement inclinable vers l'assise.

## Revendications

1. Siège pour véhicule automobile, du type comprenant une assise (12) munie d'une armature (22) d'assise et un dossier (14) muni d'une armature (28) de dossier portant une matelassure (30) recouverte d'une coiffe (32), l'armature (28) de dossier étant reliée à l'armature (22) d'assise par des moyens (34) d'articulation autour d'un axe (X) sensiblement transversal au siège, l'armature (28) de dossier portant une tige (56) sensiblement transversale d'accrochage de la coiffe (32) de dossier, cette tige (56) s'étendant à proximité des moyens d'articulation (34), caractérisé en ce que la tige (56) est munie de prolongements d'extrémités (P) formant des protections destinées à empêcher un choc d'un passager assis derrière le siège contre les moyens d'articulation (34).

2. Siège selon la revendication 1, caractérisé en ce que chaque prolongement de protection (P) comporte une anse (60) s'incurvant autour de l'axe (X) d'articulation du siège, sensiblement parallèlement à un plan perpendiculaire à cet axe (X).

3. Siège selon la revendication 2, caractérisé en ce que les moyens d'articulation (34) comprennent une paire d'articulations latérales (44,46) reliant chacune un flasque latéral (40,42) solidaire de l'armature (28) de dossier à un flasque latéral (36,38) correspondant solidaire de l'armature (22) d'assise, chaque flasque (40,42) d'armature de dossier étant entouré, au moins partiellement, d'une anse de protection (60) correspondante.

4. Siège selon la revendication 3, caractérisé en ce que l'anse de protection (60) comporte une première extrémité (60A) de jonction avec le reste de la tige (56) et une seconde extrémité libre (60B), ces première (60A) et seconde (60B) extrémités étant fixées sur le flasque (40,42) de dossier correspondant.

5. Siège selon la revendication 4, caractérisé en ce que les première (60A) et seconde (60B) extrémités de l'anse sont soudées sur le flasque (40,42) de dossier correspondant.

6. Siège selon la revendication 4 ou 5, caractérisé en ce que l'armature (28) de dossier comprend deux branches tubulaires (50,52) munies d'extrémités libres délimitant les flasques (40,42) de dossier, ces flasques de dossier comportant chacun une zone centrale (Z) aplatie par écrasement des extrémités libres et bordée par deux bourrelets creux (B) sensiblement parallèles, l'extrémité libre (60B) de chaque anse (60) étant emboîtée dans un des bourrelets (B) du flasque (40,42) de dossier correspondant.

7. Siège selon l'une quelconque des revendications 4 à 6, caractérisé en ce que la tige d'accrochage (56) comprend un tronçon formant traverse (58) relié aux deux anses (60) par deux tronçons de liaison (62) pliés en forme générale de manivelle, de manière que le tronçon formant traverse (58) est décalé sensiblement perpendiculairement à l'axe d'articulation (X) par rapport aux extrémités de jonction (60A) des anses, vers le bas du dossier (14) en considérant ce dernier dressé dans une position normale d'utilisation.

8. Siège selon l'une quelconque des revendications précédentes, caractérisé en ce que le dossier (14) est rabattable contre l'assise (12), en position sensiblement horizontale, de manière à placer le siège dans une configuration en tablette.
